(19) Europäisches Patentamt
European Patent Office
Office européen des brevets

(11) EP 4 794 230 A1

(12) EUROPEAN PATENT APPLICATION
published in accordance with Art. 153(4) EPC

(43) Date of publication:
**19.08.2026 Bulletin 2026/34**

(21) Application number: **24887761.5**

(22) Date of filing: **24.10.2024**

(51) International Patent Classification (IPC):
***H04L 1/00*** *(2006.01)*

(52) Cooperative Patent Classification (CPC):
**H04B 17/309; H04L 1/00**

(86) International application number:
**PCT/CN2024/126985**

(87) International publication number:
**WO 2025/098148 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 CN 202311492942**

(71) Applicants:
- **CHINA MOBILE COMMUNICATION CO., LTD RESEARCH INSTITUTE
Beijing 100053 (CN)**
- **CHINA MOBILE COMMUNICATIONS GROUP CO., LTD.
Beijing 100032 (CN)**

(72) Inventors:
- **CAO, Yuhua
Beijing 100032 (CN)**
- **ZHENG, Yi
Beijing 100032 (CN)**
- **ZHANG, Jiazhen
Beijing 100032 (CN)**
- **LIU, Yongchang
Beijing 100032 (CN)**

(74) Representative: **Murgitroyd & Company
165-169 Scotland Street
Glasgow G5 8PL (GB)**

# (54) INFORMATION REPORTING METHOD, APPARATUS AND SYSTEM, DEVICE, AND STORAGE MEDIUM

(57) Provided are an information reporting method, an information reporting apparatus, an information reporting system, a device, and a storage medium, which relate to the field of communications technology. The method includes: reporting, to a network device, first information and second information via CSI reporting; wherein the first information is CSI of a first type or a performance monitoring report, and the performance monitoring report is for monitoring the CSI of a second type; wherein the second information is the CSI of the second type; wherein the CSI of the first type corresponds to the CSI of the second type; such technical solution can be applied in the field of wireless communication.

start
reporting, to a network device, first information and second information via CSI report; wherein the first information is CSI of a first type or a performance monitoring report, and the performance monitoring report is for monitoring the CSI of a second type; wherein the second information is the CSI of the second type; the CSI of the first type corresponds the CSI of the second type
101
end
FIG. 1



Processed by Luminess, 75001 PARIS (FR)

## Description

### CROSS-REFERENCE TO RELATED APPLICATION

This application claims priority to Chinese Patent Application No. 202311492942.1 filed in China on November 10, 2023, a disclosure of which is incorporated herein by reference in its entirety.

### TECHNICAL FIELD

The present disclosure relates to the field of communication technology, and in particular, to an information reporting method, an information reporting apparatus, an information reporting system, a device, and a storage medium.

### BACKGROUND

Channel State Information (CSI) prediction can be implemented through Artificial Intelligence (AI) technology. Specifically, a preset AI model can be used to predict CSI at a future time based on CSI measured at historical times.

However, due to changes in configured parameters or scenarios, the AI model may no longer be suitable for the current environment, thereby degrading the performance of the AI model in predicting CSI, leading to the problem of inaccurate predicted CSI.

To solve the above problem, a network device, such as a base station, needs to monitor the accuracy of the predicted CSI. In the process of monitoring the accuracy of the predicted CSI, the network device needs to use multiple pieces of CSI-related information, such as the predicted CSI, the actually measured CSI, etc. How to report the multiple pieces of CSI-related information to the network device has become an urgent problem to be solved.

### SUMMARY

Embodiments of the present disclosure provide an information reporting method, apparatus, system, device, and storage medium to solve the problem in the related art that multiple pieces of CSI-related information cannot be reported to a network device.

In a first aspect, an embodiment of the present disclosure provides an information reporting method, applied to a user equipment, including:

> reporting, to a network device, first information and second information via channel state information (CSI) report;
> wherein the first information is CSI of a first type or a performance monitoring report, and the performance monitoring report is for monitoring the CSI of a second type;
> wherein the second information is the CSI of the second type;
> wherein the CSI of the first type corresponds to the CSI of the second type.

Optionally, the reporting, to the network device, the first information and the second information via the CSI report includes:
reporting, to the network device, a first CSI report and a second CSI report, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, a report quantity (reportQuantity) in a first CSI report configuration is channel state information reference signal resource indicator - rank indicator - layer indicator - precoding matrix indicator - channel quality indicator (cri-RI-LI-PMI-CQI) or channel state information reference signal resource indicator - rank indicator - precoding matrix indicator - channel quality indicator (cri-RI-PMI-CQI).

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are

the same.

Optionally, when the time-domain type is semi-persistent, the first CSI report and the second CSI report are activated for reporting by a same medium access control control element (MAC CE) or a same downlink control information (DCI); or

when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the information reporting method may further include:

omitting the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;

wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y=3$;

wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;

wherein c is a serving cell index configured by higher layer signaling;

wherein $N_{cells}$ is a value of a higher layer parameter maxNrofServingCells;

wherein s is a report configuration identity reportConfigID configured by higher layer signaling;

wherein $M_s$ is a value of a higher layer parameter maxNrofCSI-ReportConfigurations;

wherein i is a CSI report index within linked CSI reports, i∈[0, $K_i$ - 1], $K_i$ is a number of CSI reports within the linked CSI reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or

at least two first CSI reports in the first linked CSI reports correspond to one second CSI report in the second linked CSI reports.

Optionally, the reporting, to the network device, the first information and the second information via the CSI report includes:

reporting, to the network device, a third CSI report, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity

of each of the first information and the second information is twice the periodicity; or

a reporting periodicity of each of the first information and the second information is twice the periodicity, and a reporting time offset difference between the first information and the second information is one periodicity.

Optionally, when the first information is the CSI of the first type, a report quantity of the first information includes a precoding matrix indicator (PMI); or, when the first information is the performance monitoring report, the performance monitoring report includes any one or a combination of: a generalized cosine similarity (GCS), square generalized cosine similarity (SGCS), or a normalized mean square error (NMSE);

a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or

a report quantity of the first information includes identification information of the second information and a reporting occasion index of the second information.

In a second aspect, an embodiment of the present disclosure provides an information reporting method, applied to a network device, including:

receiving first information and second information determined by a user equipment based on a channel state information (CSI) report configuration;

wherein the CSI report configuration is configured by the network device;

wherein the first information is CSI of a first type or a performance monitoring report, and the performance monitoring report is for monitoring the CSI of a second type;

wherein the second information is the CSI of the second type;

wherein the CSI of the first type corresponds to the CSI of the second type.

Optionally, the receiving the first information and the second information determined by the user equipment based on the CSI report configuration includes:

receiving a first CSI report and a second CSI report determined by the user equipment based on the CSI report configuration, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or

the first CSI report and the second CSI report are configured as linked CSI reports through a same identity.

Optionally, when the first information is the CSI of the first type, a report quantity of the first CSI report includes a precoding matrix indicator (PMI); or

when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;

when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or

when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, k =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i \in [0, K_i - 1]$, $K_i$ is a number of CSI reports within the linked CSI reports, and the linked CSI reports are obtained based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the receiving the first information and the second information determined by the user equipment based on the CSI report configuration includes:
receiving a third CSI report determined by the user equipment based on the CSI report configuration, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.

Optionally, reportQuantity in a first information configuration is cri-RI-LI-PMI-CQI or cri-RI-PMI-CQI; and/or

reportQuantity in a second information configuration is cri-RI-LI-PMI-CQI or cri-RI-PMI-CQI.

Optionally, the first information and the second information are associated through a same process identity (process ID); or
a report quantity of the first information includes identification information of the second information and a reporting occasion index of the second information.

In a third aspect, an embodiment of the present disclosure provides an information reporting apparatus, applied to a user equipment, including:

a first module, configured to report, to a network device, first information and second information via channel state information (CSI) report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

Optionally, the first module is further configured to report, to the network device, a first CSI report and a second CSI report, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first module is further configured to omit the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, i∈[0, $K_i$ - 1], $K_i$ is a number of CSI reports within the linked CSI

reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or

at least two first CSI reports in the first linked CSI reports correspond to one second CSI report in the second linked CSI reports.

Optionally, the first module is further configured to report, to the network device, a third CSI report, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or

a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);

a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or

a report quantity of the first information includes identification information of the second information and a reporting occasion index of the second information.

In a fourth aspect, an embodiment of the present disclosure provides an information reporting apparatus, applied to a network device, including:

a first module, configured to receive first information and second information determined by a user equipment based on a channel state information (CSI) report configuration;

wherein the channel state information (CSI) report configuration is configured by the network device;

wherein the first information is CSI of a first type or a performance monitoring report, and the performance monitoring report is for monitoring the CSI of a second type;

wherein the second information is the CSI of the second type;

wherein the CSI of the first type corresponds to the CSI of the second type.

Optionally, the first module is further configured to receive a first CSI report and a second CSI report determined by the user equipment based on the CSI report configuration, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or

the first CSI report and the second CSI report are configured as linked CSI reports through a same identity.

Optionally, when the first information is the CSI of the first type, a report quantity of the first CSI report includes a precoding matrix indicator (PMI); or

when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2\cdot N_{cells}\cdot M_s\cdot y + N_{cells}\cdot M_s\cdot k + M_s\cdot c + s + \frac{1}{K_i}i,$$

or

$$\mathrm{Pri}_{iCSI}(y,k,c,s,x) = 2\cdot N_{cells}\cdot M_s\cdot K_i\cdot y + N_{cells}\cdot M_s\cdot K_i\cdot k + M_s\cdot K_i\cdot c + K_i\cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i\in[0, K_i - 1]$, $K_i$ is a number of CSI reports within the linked CSI reports, and the linked CSI reports are obtained based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the first module is further configured to receive a third CSI report determined by the user equipment based on the CSI report configuration, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity

of each of the first information and the second information is twice the periodicity; or
a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or
a report quantity of the first information includes identification information of the second information and a reporting occasion index of the second information.

In a fifth aspect, an embodiment of the present disclosure provides an information reporting apparatus, applied to a user equipment, including: a processor and a transceiver;

the processor is configured to configure channel state information (CSI) report;
the transceiver is configured to report, to a network device, first information and second information via the CSI report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

Optionally, the transceiver is further configured to report, to the network device, a first CSI report and a second CSI report, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the processor is further configured to omit the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, y =1; for a semi-persistent CSI report carried on a physical uplink control channel (PUCCH), y =2; for a periodic CSI report carried on the PUCCH, y =*3;*
wherein for a CSI report carrying layer-1 reference signal received power (L1-RSRP) or layer-1 signal to interference plus noise ratio (L1-SINR), k =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i \in [0, K_i - 1]$, $K_i$ is a number of CSI reports within the linked CSI reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.
Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the transceiver is further configured to report, to the network device, a third CSI report, wherein the third CSI report is used to report the first information and the second information, and the first information corresponds to the second information.
Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.
Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.
Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.
Optionally, the first information and the second information are associated through a same process identity (process ID); or
a report quantity of the first information includes identification information of the second information and a reporting occasion index of the second information.
In a sixth aspect, an embodiment of the present disclosure provides an information reporting apparatus, applied to a network device, including: a processor and a transceiver;

the processor is configured to configure a channel state information (CSI) report configuration;
the transceiver is configured to receive first information and second information determined by a user equipment based on the CSI report configuration;
wherein the first information is CSI of a first type or a performance monitoring report, and the performance monitoring report is for monitoring the CSI of a second type;

wherein the second information is the CSI of the second type;
wherein the CSI of the first type corresponds to the CSI of the second type.

Optionally, the transceiver is further configured to receive a first CSI report and a second CSI report determined by the user equipment based on the CSI report configuration, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2\cdot N_{cells}\cdot M_s\cdot y + N_{cells}\cdot M_s\cdot k + M_s\cdot c + s + \frac{1}{K_i}i,$$

or

$$\mathrm{Pri}_{iCSI}(y,k,c,s,x) = 2\cdot N_{cells}\cdot M_s\cdot K_i\cdot y + N_{cells}\cdot M_s\cdot K_i\cdot k + M_s\cdot K_i\cdot c + K_i\cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i\in[0, K_i - 1]$, $K_i$ is a number of CSI reports within the linked CSI reports, and the linked CSI reports are obtained based on configurations of the first CSI report and the second CSI report.

Optionally, when the first CSI report and the second CSI report are configured as linked CSI reports, a number of

the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the transceiver is further configured to receive a third CSI report determined by the user equipment based on the CSI report configuration, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or
a report quantity of the first information includes identification information of the second information and a reporting occasion index of the second information.

In a seventh aspect, an embodiment of the present disclosure provides an information reporting system, including:

a user equipment, configured to report, to a network device, first information and second information via channel state information (CSI) report, wherein the first information is CSI of a first type or a performance monitoring report, the performance monitoring report is for monitoring the CSI of a second type, the second information is the CSI of the second type, and the CSI of the first type corresponds to the CSI of the second type;
the network device, configured to receive the first information and the second information determined by the user equipment based on a channel state information (CSI) report configuration, wherein the CSI report configuration is configured by the network device.

Optionally, the user equipment is further configured to report, to the network device, a first CSI report and a second CSI report, wherein the first CSI report is used to report the first information, the second CSI report is used to report the second information, and the first CSI report corresponds to the second CSI report;
the network device is further configured to receive the first CSI report and the second CSI report determined by the user equipment based on the CSI report configuration.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are

the same.

Optionally, when the time-domain type is semi-persistent, the first CSI report and the second CSI report are activated for reporting by a same medium access control control element (MAC CE) or a same downlink control information (DCI); or

when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the user equipment is further configured to omit the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;

wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;

wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;

wherein c is a serving cell index configured by higher layer signaling;

wherein $N_{cells}$ is a value of a higher layer parameter maxNrofServingCells;

wherein s is a report configuration identity reportConfigID configured by higher layer signaling;

wherein $M_s$ is a value of a higher layer parameter maxNrofCSI-ReportConfigurations;

wherein i is a CSI report index within linked CSI reports, $i \in [0, K_i - 1]$, $K_i$ is a number of CSI reports within the linked CSI reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or

at least two first CSI reports in the first linked CSI reports correspond to one second CSI report in the second linked CSI reports.

Optionally, the user equipment is further configured to report, to the network device, a third CSI report, wherein the third CSI report is used to report the first information and the second information, and the first information corresponds to the second information;

the network device is further configured to receive the third CSI report determined by the user equipment based on the CSI report configuration.

Optionally, the first information and the second information are reported at two consecutive reporting occasions,

wherein an interval between the two consecutive reporting occasions is one preset periodicity, and a reporting periodicity of each of the first information and the second information is twice the periodicity; or

a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);

a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or

a report quantity of the first information includes identification information of the second information and a reporting occasion index of the second information.

In an eighth aspect, an embodiment of the present disclosure provides a communication device, including: a transceiver, a memory, a processor, and a program stored in the memory and executable on the processor;

the processor is configured to read the program in the memory to implement the information reporting method described above.

In a ninth aspect, an embodiment of the present disclosure provides a readable storage medium for storing a program, wherein the program, when executed by a processor, implements the information reporting method described above.

In the embodiments of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

## BRIEF DESCRIPTION OF THE DRAWINGS

FIG. 1 is a flowchart of an information reporting method provided by an embodiment of the present disclosure;

FIG. 2 is another flowchart of an information reporting method provided by an embodiment of the present disclosure;

FIG. 3 is yet another flowchart of an information reporting method provided by an embodiment of the present disclosure;

FIG. 4 is still yet another flowchart of an information reporting method provided by an embodiment of the present disclosure;

FIG. 5 is a schematic structural diagram of an information reporting apparatus provided by an embodiment of the present disclosure;

FIG. 6 is another schematic structural diagram of an information reporting apparatus provided by an embodiment of the present disclosure;

FIG. 7 is yet another schematic structural diagram of an information reporting apparatus provided by an embodiment of the present disclosure;

FIG. 8 is still yet another schematic structural diagram of an information reporting apparatus provided by an embodiment of the present disclosure;

FIG. 9 is a schematic structural diagram of an information reporting system provided by an embodiment of the present disclosure.

## DETAILED DESCRIPTION

In the embodiments of this disclosure, the term "and/or" describes the association relationship between associated objects, indicating that there can be three relationships, for example, A and/or B can mean: A exists alone,

A and B exist simultaneously, and B exists alone. Additionally, the symbol "/" generally indicates that the associated objects are in an "or" relationship.

In the embodiments of this disclosure, the term "multiple" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in this disclosure, all other embodiments obtained by those of ordinary skill in the art without making creative efforts fall within the scope of this disclosure.

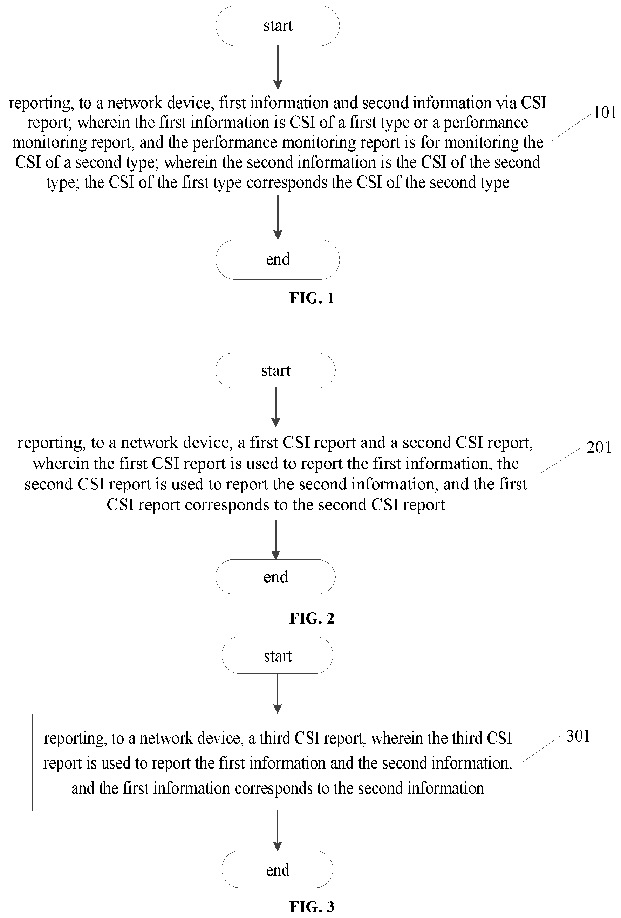

Referring to FIG. 1, FIG. 1 is a flowchart of an information reporting method provided by an embodiment of the present disclosure. The information reporting method can be applied to a user equipment. As shown in FIG. 1, the method includes the following step.

Step 101: reporting, to a network device, first information and second information via channel state information (CSI) report; wherein the first information is CSI of a first type or a performance monitoring report, and the performance monitoring report is for monitoring the CSI of a second type; the second information is the CSI of the second type; and the CSI of the first type corresponds to the CSI of the second type.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

In this embodiment, the method for reporting the first information and the second information to the network device via CSI reporting may include two types: one is to report the first information and the second information to the network device through different CSI reports; the other is to report the first information and the second information to the network device through one CSI report.

In order to enable those skilled in the art to understand the above two methods for reporting the first information and the second information more clearly, specific embodiments are described below.

Referring to FIG. 2, FIG. 2 is a flowchart of an information reporting method provided by an embodiment of the present disclosure. The information reporting method can be applied to a user equipment. As shown in FIG. 2, the method includes the following step.

Step 201: reporting, to a network device, a first CSI report and a second CSI report, wherein the first CSI report is used to report the first information, the second CSI report is used to report the second information, and the first CSI report corresponds to the second CSI report.

In this embodiment, the first information may be CSI of a first type or a performance monitoring report, wherein the performance monitoring report is for monitoring the CSI of a second type; the second information may be the CSI of the second type.

In this embodiment, when the first information is the CSI of the first type, a report quantity of the first CSI report includes a precoding matrix indicator (PMI).

In this embodiment, the first CSI report may be configured through a first CSI report configuration, and the report quantity of the first CSI report may be reportQuantity. The reportQuantity in the first CSI report configuration is channel state information reference signal resource indicator - rank indicator - layer indicator - precoding matrix indicator - channel quality indicator (cri-RI-LI-PMI-CQI) or channel state information reference signal resource indicator - rank indicator - precoding matrix indicator - channel quality indicator (cri-RI-PMI-CQI), etc.

In this embodiment, when the first information is the performance monitoring report, the performance monitoring report includes any one or a combination of:

a generalized cosine similarity (GCS), square generalized cosine similarity (SGCS), or a normalized mean square error (NMSE), etc.

In this embodiment, the configuration methods for the first CSI report and the second CSI report having a link may include two types:

One is to configure the first CSI report and the second CSI report as linked CSI reports.

In this embodiment, the first CSI report and the second CSI report may be configured as linked CSI reports through radio resource control (RRC); or, the first CSI report and the second CSI report may be configured as linked CSI reports through a same identity, wherein the identity may be configured by the network device, such as a base station. This

embodiment does not specifically limit the identity. This embodiment uses the identity being a linking ID as an example for illustration, and it may also be other identities in actual use, which will not be described in detail here.

The other is to configure the first CSI report in a first linked CSI reports, and configure the second CSI report in a second linked CSI reports, wherein the first CSI report in the first linked CSI reports are associated with the second CSI report in the second linked CSI reports.

In this embodiment, the association between the first CSI report in the first linked CSI reports and the second CSI report in the second linked CSI reports may include:

each first CSI report in the first linked CSI reports corresponds to each second CSI report in the second linked CSI reports on a one-to-one mapping according to their order. For example: the first one of the first CSI reports in the first linked CSI reports are associated with the first second CSI report in the second linked CSI reports as the first CSI report pair, the second first CSI report in the first linked CSI reports are associated with the second one of the second CSI reports in the second linked CSI reports as the second CSI report pair, and so on;

one first CSI report in the first linked CSI reports corresponds to at least two second CSI reports in the second linked CSI reports. For example: the first one of the first CSI reports in the first linked CSI reports are associated with the first second CSI report in the second linked CSI reports as the first CSI report pair, and the first one of the first CSI reports in the first linked CSI reports are associated with the second one of the second CSI reports in the second linked CSI reports as the second CSI report pair;

at least two first CSI reports in the first linked CSI reports correspond to one second CSI report in the second linked CSI reports. For example: the first one of the first CSI reports in the first linked CSI reports are associated with the first second CSI report in the second linked CSI reports as the first CSI report pair, and the second first CSI report in the first linked CSI reports are associated with the first second CSI report in the second linked CSI reports as the second CSI report pair.

It should be noted that this embodiment does not limit the number of CSI reports included in the first linked CSI reports and the second linked CSI reports, and the numbers of CSI reports included in the first linked CSI reports and the second linked CSI reports may be the same or different.

By configuring the link between the first CSI report and the second CSI report through the above two methods, greater flexibility is achieved, making it applicable to the requirements of different communication scenarios.

In this embodiment, when the first CSI report and the second CSI report are configured as linked CSI reports, a number of the first CSI report is one and a number of the second CSI report is more than one, or a number of the first CSI report is more than one and a number of the second CSI report is one.

In this embodiment, the first CSI report and the second CSI report have a same time-domain type, wherein the time-domain type may include: periodic, semi-persistent, and aperiodic. When the time-domain type is periodic or semi-persistent, periodicities of the first CSI report and the second CSI report are the same.

In this embodiment, when the time-domain type is semi-persistent, the first CSI report and the second CSI report are activated for reporting by a same medium access control control element (MAC CE) or a same downlink control information (DCI); or, when the time-domain type is aperiodic, the first CSI report and the second CSI report are triggered for reporting by a same DCI.

In this embodiment, when a number of the first CSI report or the second CSI report is M, a MAC CE or DCI may indicate to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and N∈[1, M].

In this embodiment, the MAC CE or DCI used to indicate to select N first CSI reports or N second CSI reports from the M first CSI reports or the M second CSI reports, or activates the N first CSI reports or the N second CSI reports for reporting from the M first CSI reports or the M second CSI reports may be the same as or different from the MAC CE or DCI used to activate the first CSI report and the second CSI report.

The technical solution provided by this embodiment provides specific triggering methods for the first CSI report and the second CSI report in semi-persistent and aperiodic situations, so that the triggering of the first CSI report and the second CSI report can utilize existing network resources without needing to set up separate triggering apparatus or signaling.

In this embodiment, the priority of the first CSI report and the priority of the second CSI report may be obtained through multiple methods, which may include:

one is to calculate the priority through the following formula (1) or (2):

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i \qquad (1),$$

or

$$\mathrm{Pri}_{iCSI}(y, k, c, s, x) = 2 \cdot N_{\mathrm{cells}} \cdot M_{\mathrm{s}} \cdot K_i \cdot y + N_{cells} \cdot M_s \cdot K_i \cdot k + M_s \cdot K_i \cdot c + K_i \cdot s + i \text{ i. (2)} \quad (2)$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, i∈[0, $K_i$ - 1], $K_i$ is a number of CSI reports within the linked CSI reports, and the linked CSI reports are determined based on configurations of the first CSI report and the second CSI report.

The other is to calculate the priority of the first CSI report and the priority of the second CSI report based on related information of the second CSI report.

For example: the priority is calculated based on related information of the second CSI report, and the priority of the first CSI report is equal to the priority of the second CSI report, that is: the first CSI report and the second CSI report have a same priority.

For another example: the priority is calculated based on related information of the second CSI report, and the priority of the second CSI report is equal to the priority of the first CSI report plus 1, that is: a priority value of the second CSI report is greater than a priority value of the first CSI report.

For yet another example: when the first CSI report and the second CSI report are configured as linked CSI reports, the priority is calculated based on related information of the second CSI report, and the priority is associated with the linked CSI reports. All CSI reports within the linked CSI reports are associated with the priority, that is: the first CSI report and the second CSI report have a same priority.

Optionally, the information reporting method provided by this embodiment may further include a step of omitting the first CSI report when the second CSI report is omitted. From the above description, it can be seen that the first CSI report is used to monitor the performance of the CSI of the second type reported by the second CSI report. Therefore, when the second CSI report is omitted, the first CSI report may also be omitted, thereby avoiding the problem of wasting communication resources caused by still reporting the first CSI report when the second CSI report is omitted.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

Referring to FIG. 3, FIG. 3 is a flowchart of an information reporting method provided by an embodiment of the present disclosure. The information reporting method can be applied to a user equipment. As shown in FIG. 3, the method includes the following step.

Step 301: reporting, to a network device, a third CSI report, wherein the third CSI report is used to report the first information and the second information, and the first information corresponds to the second information.

In this embodiment, the first information may be CSI of a first type or a performance monitoring report, wherein the performance monitoring report is for monitoring the CSI of a second type; the second information may be the CSI of the second type.

In this embodiment, the first information and the second information are reported at two consecutive reporting occasions. For example: the user equipment reports the first information at reporting occasion#1, reports the second information at reporting occasion#1+periodicity, reports the first information at reporting occasion#1+2*periodicity, reports the second information at reporting occasion#1+3*periodicity, and so on.

An interval between the two consecutive reporting occasions is one preset periodicity, and a reporting periodicity of each of the first information and the second information is twice the periodicity; or, a reporting periodicity of each of the first information and the second information is twice the periodicity, and a reporting time offset difference between the first information and the second information is one periodicity.

In this embodiment, when the first information is the CSI of the first type, a report quantity of the first information at least includes a PMI; or, when the first information is the performance monitoring report, the performance monitoring report includes any one or a combination of: a generalized cosine similarity (GCS), square generalized cosine similarity (SGCS), or a normalized mean square error (NMSE); a report quantity of the second information at least includes the PMI.

In this embodiment, the first information may be configured through a first information configuration, and the report quantity of the first information may be set through reportQuantity in the first information configuration; the second information may be configured through a second information configuration, and the report quantity of the second information may be set through reportQuantity in the second information configuration. The reportQuantity in the first information configuration is cri-RI-LI-PMI-CQI or cri-RI-PMI-CQI, etc.; and/or, the reportQuantity in the second information configuration is cri-RI-LI-PMI-CQI or cri-RI-PMI-CQI, etc.

In this embodiment, the first information and the second information can be associated through two methods.

One is that the first information and the second information are associated through a same process identity (process ID).

The other is that a report quantity of the first information includes identification information of the second information and a reporting occasion index of the second information.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

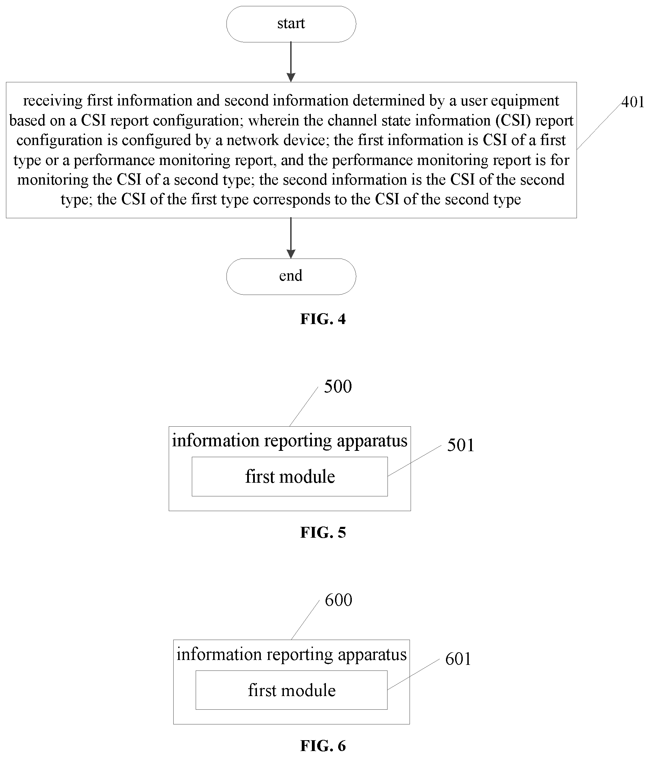

Referring to FIG. 4, FIG. 4 is a flowchart of an information reporting method provided by an embodiment of the present disclosure. The information reporting method can be applied to a network device. As shown in FIG. 4, the method includes the following step.

Step 401: receiving first information and second information determined by a user equipment based on a channel state information (CSI) report configuration; wherein the CSI report configuration is configured by the network device; the first information is CSI of a first type or a performance monitoring report, and the performance monitoring report is for monitoring the CSI of a second type; the second information is the CSI of the second type; the CSI of the first type corresponds to the CSI of the second type.

Optionally, the receiving the first information and the second information determined by the user equipment based on the CSI report configuration includes:

receiving a first CSI report and a second CSI report determined by the user equipment based on the CSI report configuration, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or

the first CSI report and the second CSI report are configured as linked CSI reports through a same identity.

Optionally, when the first information is the CSI of the first type, a report quantity of the first CSI report includes a precoding matrix indicator (PMI); or

when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;

when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or

when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and $N \in [1, M]$.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the formula (1) or (2) provided in the above embodiment.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or

at least two first CSI reports in the first linked CSI reports correspond to one second CSI report in the second linked CSI reports.

Optionally, the receiving the first information and the second information determined by the user equipment based on the CSI report configuration includes:

receiving a third CSI report determined by the user equipment based on the CSI report configuration, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or

a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);

a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or

a report quantity of the first information includes identification information of the second information and a reporting occasion index of the second information.

The information reporting method provided by this embodiment corresponds to the information reporting methods shown in FIG. 1 to FIG. 3. For specific implementation, reference may be made to the description of the embodiments shown in FIG. 1 to FIG. 3, which will not be repeated here.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

In the embodiments shown in FIG. 1 to FIG. 4 above, the CSI of the first type may be CSI measured by the user

equipment, and the CSI of the second type may be CSI predicted by the user equipment using an AI model. In this case, the performance monitoring report may specifically be a performance monitoring report of the CSI predicted by the user equipment using the AI model.

The network device, such as a base station, can calculate a performance monitoring report, such as SGCS, based on the CSI measured by the user equipment and the CSI predicted by the user equipment using the AI model reported by the user equipment, and compare the calculated performance monitoring report with a preset threshold. When the value of the performance monitoring report is lower than the threshold, it is determined that the CSI predicted by the AI model is inaccurate, and further it can be determined that the performance of the AI model cannot meet the requirements. When the value of the performance monitoring report is higher than the threshold, it is determined that the CSI predicted by the AI model is accurate, and further it can be determined that the performance of the AI model can meet the requirements.

The network device, such as a base station, can also compare the performance monitoring report of the CSI predicted by the user equipment using the AI model, such as SGCS, reported by the user equipment with a preset threshold. When the value of the performance monitoring report is lower than the threshold, it is determined that the CSI predicted by the AI model is inaccurate, and further it can be determined that the performance of the AI model cannot meet the requirements. When the value of the performance monitoring report is higher than the threshold, it is determined that the CSI predicted by the AI model is accurate, and further it can be determined that the performance of the AI model can meet the requirements.

It should be noted that, the above CSI of the first type and CSI of the second type are only specific illustrations. In actual use, the CSI of the first type and the CSI of the second type may be other CSIs having a link, which will not be described one by one here.

Referring to FIG. 5, FIG. 5 is a schematic structural diagram of an information reporting apparatus provided by an embodiment of the present disclosure. The information reporting apparatus 500 can be applied to a user equipment. As shown in FIG. 5, the information reporting apparatus 500 may include:

a first module 501, configured to report, to a network device, first information and second information via channel state information (CSI) report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

Optionally, the first module 501 is further configured to report, to the network device, a first CSI report and a second CSI report, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first module 501 is further configured to omit the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i \in [0, K_i - 1]$, $K_i$ is a number of CSI reports within the linked CSI reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the first module 501 is further configured to report, to the network device, a third CSI report, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or
a report quantity of the first information includes identification information of the second information and a reporting

occasion index of the second information.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

Referring to FIG. 6, FIG. 6 is a schematic structural diagram of an information reporting apparatus provided by an embodiment of the present disclosure. The information reporting apparatus 600 can be applied to a network device. As shown in FIG. 6, the information reporting apparatus 600 may include:

a first module 601, configured to receive first information and second information determined by a user equipment based on a channel state information (CSI) report configuration;
wherein the channel state information (CSI) report configuration is configured by the network device;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

Optionally, the first module 601 is further configured to receive a first CSI report and a second CSI report determined by the user equipment based on the CSI report configuration, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}$ *(y, k, c, s, x)* corresponds a higher priority;
wherein for an aperiodic CSI report carried on a physical uplink shared channel (PUSCH), $y$ =0; for a semi-persistent CSI report carried on the PUSCH, y =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, i∈[0, $K_i$ - 1], $K_i$ is a number of CSI reports within the linked CSI reports, and the linked CSI reports are obtained based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the first module 601 is further configured to receive a third CSI report determined by the user equipment based on the CSI report configuration, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or
a report quantity of the first information includes identification information of the second information and a reporting occasion index of the second information.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant

content, and reported information content is more reasonable and concise, thereby avoiding a problem of an excessive reporting data volume caused by redundant information.

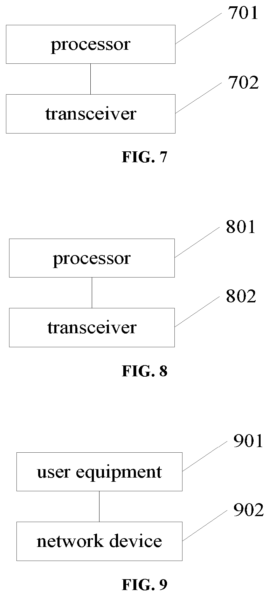

Referring to FIG. 7, FIG. 7 is a schematic structural diagram of an information reporting apparatus provided by an embodiment of the present disclosure. The information reporting apparatus, applied to a user equipment, includes: a processor 701 and a transceiver 702;

the processor 701 is configured to configure channel state information (CSI) report;
the transceiver 702 is configured to report, to a network device, first information and second information via the CSI report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

Optionally, the transceiver 702 is further configured to report, to the network device, a first CSI report and a second CSI report, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and N∈[1, M].

Optionally, the processor 701 is further configured to omit the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, y =1; for a semi-persistent CSI report carried on a physical uplink control channel

(PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i \in [0, K_i - 1]$, $K_i$ is a number of CSI reports within the linked CSI reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the transceiver 702 is further configured to report, to the network device, a third CSI report, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or
a report quantity of the first information includes identification information of the second information and a reporting occasion index of the second information.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

Referring to FIG. 8, FIG. 8 is a schematic structural diagram of an information reporting apparatus provided by an embodiment of the present disclosure. The information reporting apparatus, applied to a network device, includes: a processor 801 and a transceiver 802;

the processor 801 is configured to configure a channel state information (CSI) report configuration;

the transceiver 802 is configured to receive first information and second information determined by a user equipment

based on the CSI report configuration;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

Optionally, the transceiver 802 is further configured to receive a first CSI report and a second CSI report determined by the user equipment based on the CSI report configuration, wherein the first CSI report is used to report the first information, the second CSI report is used to report the second information, and the first CSI report corresponds to the second CSI report.

Optionally, the first CSI report and the second CSI report are configured as linked CSI reports through radio resource control (RRC); or
the first CSI report and the second CSI report are configured as linked CSI reports through a same identity.

Optionally, when the first information is the CSI of the first type, a report quantity of the first CSI report includes a precoding matrix indicator (PMI); or
when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;
when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}$ *(y, k, c, s, x)* corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, i∈[0, $K_i$ - 1], $K_i$ is a number of CSI reports within the linked CSI reports, and the linked CSI reports are obtained based on configurations of the first CSI report and the second CSI

report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or

at least two first CSI reports in the first linked CSI reports correspond to one second CSI report in the second linked CSI reports.

Optionally, the transceiver 802 is further configured to receive a third CSI report determined by the user equipment based on the CSI report configuration, wherein the third CSI report is used to report the first information and the second information, and the first information corresponds to the second information.

Optionally, the first information and the second information are reported at two consecutive reporting occasions, wherein an interval between the two consecutive reporting occasions is one preset periodicity, and a reporting periodicity of each of the first information and the second information is twice the periodicity; or

a reporting periodicity of each of the first information and the second information is twice the periodicity, and a reporting time offset difference between the first information and the second information is one periodicity.

Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);

a report quantity of the second information includes the PMI.

Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.

Optionally, the first information and the second information are associated through a same process identity (process ID); or

a report quantity of the first information includes identification information of the second information and a reporting occasion index of the second information.

In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.

Referring to FIG. 9, FIG. 9 is a schematic structural diagram of an information reporting system provided by an embodiment of the present disclosure. The information reporting system may include:

a user equipment 901, configured to report, to a network device 902, first information and second information via channel state information (CSI) report, wherein the first information is CSI of a first type or a performance monitoring report, the performance monitoring report is for monitoring the CSI of a second type, the second information is the CSI of the second type, and the CSI of the first type corresponds to the CSI of the second type;

the network device 902, configured to receive the first information and the second information determined by the user equipment 901 based on a channel state information (CSI) report configuration, wherein the CSI report configuration is configured by the network device.

Optionally, the user equipment 901 is further configured to report, to the network device 902, a first CSI report and a second CSI report, wherein the first CSI report is used to report the first information, the second CSI report is used to report the second information, and the first CSI report corresponds to the second CSI report;

the network device 902 is further configured to receive the first CSI report and the second CSI report determined by the user

equipment 901 based on the CSI report configuration.

Optionally, the first CSI report and the second CSI report are configured as linked CSI reports through radio resource control (RRC); or

the first CSI report and the second CSI report are configured as linked CSI reports through a same identity.

Optionally, when the first information is the CSI of the first type, a report quantity of the first CSI report includes a precoding matrix indicator (PMI); or

when the first information is the performance monitoring report, the performance monitoring report includes any one or a combination of: a generalized cosine similarity (GCS), square generalized cosine similarity (SGCS), or a normalized mean square error (NMSE).

Optionally, reportQuantity in a first CSI report configuration is cri-RI-LI-PMI-CQI or cri-RI-PMI-CQI.

Optionally, the first CSI report and the second CSI report have a same time-domain type, wherein the time-domain type includes: periodic, semi-persistent, and aperiodic;

when the time-domain type is periodic or semi-persistent, periodicities of the first CSI report and the second CSI report are the same.

Optionally, when the time-domain type is semi-persistent, the first CSI report and the second CSI report are activated for reporting by a same medium access control control element (MAC CE) or a same downlink control information (DCI); or

when the time-domain type is aperiodic, the first CSI report and the second CSI report are triggered for reporting by a same DCI.

Optionally, when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and N∈[1, M].

Optionally, the user equipment is further configured to omit the first CSI report when the second CSI report is omitted.

Optionally, the first CSI report and the second CSI report have a same priority, or a priority value of the second CSI report is greater than a priority value of the first CSI report; the priority is calculated based on related information of the second CSI report.

Optionally, the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;

wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;

wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;

wherein c is a serving cell index configured by higher layer signaling;

wherein $N_{cells}$ is a value of a higher layer parameter maxNrofServingCells;

wherein s is a report configuration identity reportConfigID configured by higher layer signaling;

wherein $M_s$ is a value of a higher layer parameter maxNrofCSI-ReportConfigurations;

wherein i is a CSI report index within linked CSI reports, i∈[0, $K_i$ - 1], $K_i$ is a number of CSI reports within the linked CSI reports, and the linked CSI reports are determined based on configurations of the first CSI report and the second CSI report.

Optionally, when the first CSI report and the second CSI report are configured as linked CSI reports, a number of the first CSI report is one and a number of the second CSI report is more than one, or a number of the first CSI report is more than one and a number of the second CSI report is one.

Optionally, when the first CSI report belongs to a first linked CSI reports and the second CSI report belongs to a second linked CSI reports, each first CSI report in the first linked CSI reports corresponds to each second CSI report in the

second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

Optionally, the user equipment 901 is further configured to report, to the network device 902, a third CSI report, wherein the third CSI report is used to report the first information and the second information, and the first information corresponds to the second information;
the network device 902 is further configured to receive the third CSI report determined by the user equipment 901 based on the CSI report configuration.
Optionally, the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.
Optionally, when the first information is the CSI of the first type, a report quantity of the first information includes a PMI; or, when the first information is the performance monitoring report, the performance monitoring report includes any one or a combination of: a generalized cosine similarity (GCS), square generalized cosine similarity (SGCS), or a normalized mean square error (NMSE);
a report quantity of the second information includes the PMI.
Optionally, reportQuantity in a first information configuration is cri-RI-LI-PMI-CQI or cri-RI-PMI-CQI; and/or reportQuantity in a second information configuration is cri-RI-LI-PMI-CQI or cri-RI-PMI-CQI.
Optionally, the first information and the second information are associated through a same process identity (process ID); or
a report quantity of the first information includes identification information of the second information and a reporting occasion index of the second information.
In the embodiment of the present disclosure, the user equipment can report the first information and the second information to the network device via CSI reporting. The first information and the second information are used to associate and report multiple pieces of CSI-related information (CSI of a first type or a performance monitoring report, and CSI of a second type), thereby solving the problem in the related art that multiple pieces of CSI-related information cannot be reported to the network device. In the embodiments of the present disclosure, multiple pieces of CSI-related information are reported to the network device via CSI reporting, which is more reasonable and efficient and avoids occupying other signaling resources. The reported CSI-related information specifically includes the CSI of the first type or the performance monitoring report, and the CSI of the second type, such that the reported CSI-related information has no redundant content, and reported information content is more reasonable and concise, thereby avoiding a problem of an excessive reporting data volume caused by redundant information.
An embodiment of the present disclosure provides a communication device, including: a transceiver, a memory, a processor, and a program stored in the memory and executable on the processor;
the processor is configured to read the program in the memory to implement the information reporting method described above.
It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.
If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: U disk, removable hard disk, Read-Only Memory (ROM), Random Access Memory (RAM), magnetic disk or optical disc and other media that can store program code.
An embodiment of the present disclosure further provides a readable storage medium for storing a program, and when the program is executed by a processor, the processes of the information reporting method embodiments described above are implemented and the same technical effects can be achieved. For brevity, details are not described herein

again. The readable storage medium may be any available medium or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk or Solid State Drive (SSD)), etc.

It should be noted that in this document, the terms "include", "including" or any other variants thereof are intended to cover non-exclusive inclusion, so that a process, method, article or apparatus including a series of elements includes not only those elements but also other elements not explicitly listed, or further includes elements inherent to such a process, method, article or apparatus. Without further limitation, an element defined by the phrase "including a ..." does not exclude the existence of other identical elements in the process, method, article or apparatus including the element.

Through the descriptions of the above embodiments, those skilled in the art can clearly understand that the methods of the above embodiments may be implemented by software in combination with a necessary general hardware platform, and certainly may also be implemented by hardware, but in many cases the former is a preferred implementation. Based on such understanding, the technical solution of the present disclosure, in essence or the part contributing to the related art, may be embodied in the form of a software product. The computer software product is stored in a storage medium (such as ROM/RAM, magnetic disk, optical disk) and includes several instructions to enable a terminal (which may be a mobile phone, a computer, a server, an air conditioner, or a network device, etc.) to execute the method described in the various embodiments of the present disclosure.

The embodiments of the present disclosure have been described above with reference to the accompanying drawings, but the present disclosure is not limited to the specific implementations described above. The specific implementations described above are merely illustrative rather than limiting. Under the inspiration of the present disclosure, those of ordinary skill in the art may make many variations without departing from the spirit of the present disclosure and the scope protected by the claims, and all such variations shall fall within the protection scope of the present disclosure.

## Claims

**1.** An information reporting method, applied to a user equipment, comprising:

reporting, to a network device, first information and second information via channel state information (CSI) report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

**2.** The method according to claim 1, wherein reporting, to the network device, the first information and the second information via the CSI report comprises:
reporting, to the network device, a first CSI report and a second CSI report, wherein the first CSI report is used to report the first information, the second CSI report is used to report the second information, and the first CSI report corresponds to the second CSI report.

**3.** The method according to claim 2, wherein the first CSI report and the second CSI report are configured as linked CSI reports through radio resource control (RRC); or
the first CSI report and the second CSI report are configured as linked CSI reports through a same identity.

**4.** The method according to claim 2, wherein when the first information is the CSI of the first type, a report quantity of the first CSI report comprises a precoding matrix indicator (PMI); or
when the first information is the performance monitoring report, the performance monitoring report comprises any one or a combination of: a generalized cosine similarity (GCS), square generalized cosine similarity (SGCS), or a normalized mean square error (NMSE).

**5.** The method according to claim 4, wherein a report quantity (reportQuantity) in a first CSI report configuration is channel state information reference signal resource indicator - rank indicator - layer indicator - precoding matrix indicator - channel quality indicator (cri-RI-LI-PMI-CQI) or channel state information reference signal resource indicator - rank indicator - precoding matrix indicator - channel quality indicator (cri-RI-PMI-CQI).

**6.** The method according to claim 2, wherein

the first CSI report and the second CSI report have a same time-domain type, wherein the time-domain type comprises: periodic, semi-persistent, and aperiodic;
when the time-domain type is periodic or semi-persistent, periodicities of the first CSI report and the second CSI report are the same.

**7.** The method according to claim 6, wherein

when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

**8.** The method according to claim 2, wherein when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and NE [1, M].

**9.** The method according to claim 2, further comprising:
omitting the first CSI report when the second CSI report is omitted.

**10.** The method according to claim 2, wherein the first CSI report and the second CSI report have a same priority, or a priority value of the second CSI report is greater than a priority value of the first CSI report; the priority is calculated based on related information of the second CSI report.

**11.** The method according to claim 2, wherein the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i \in [0, K_i - 1]$, $K_i$ is a number of CSI reports within the linked CSI reports, and the linked CSI reports are determined based on configurations of the first CSI report and the second CSI report.

**12.** The method according to claim 2, wherein when the first CSI report and the second CSI report are configured as linked CSI reports, a number of the first CSI report is one and a number of the second CSI report is more than one, or a number of the first CSI report is more than one and a number of the second CSI report is one.

**13.** The method according to claim 2, wherein when the first CSI report belongs to a first linked CSI reports and the second CSI report belongs to a second linked CSI reports, each first CSI report in the first linked CSI reports corresponds to

each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

**14.** The method according to claim 1, wherein reporting, to the network device, the first information and the second information via the CSI report comprises:
reporting, to the network device, a third CSI report, wherein the third CSI report is used to report the first information and the second information, and the first information corresponds to the second information.

**15.** The method according to claim 14, wherein

the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

**16.** The method according to claim 14, wherein

when the first information is the CSI of the first type, a report quantity of the first information comprises a precoding matrix indicator (PMI); or, when the first information is the performance monitoring report, the performance monitoring report comprises any one or a combination of: a generalized cosine similarity (GCS), square generalized cosine similarity (SGCS), or a normalized mean square error (NMSE);
a report quantity of the second information comprises the PMI.

**17.** The method according to claim 16, wherein reportQuantity in a first information configuration is cri-RI-LI-PMI-CQI or cri-RI-PMI-CQI; and/or
reportQuantity in a second information configuration is cri-RI-LI-PMI-CQI or cri-RI-PMI-CQI.

**18.** The method according to claim 14, wherein

the first information and the second information are associated through a same process identity (process ID); or
a report quantity of the first information comprises identification information of the second information and a reporting occasion index of the second information.

**19.** An information reporting method, applied to a network device, the method comprising:

receiving first information and second information determined by a user equipment based on a channel state information (CSI) report configuration;
wherein the CSI report configuration is configured by the network device;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

**20.** The method according to claim 19, wherein receiving the first information and the second information determined by the user equipment based on the CSI report configuration comprises:
receiving a first CSI report and a second CSI report determined by the user equipment based on the CSI report configuration, wherein the first CSI report is used to report the first information, the second CSI report is used to report the second information, and the first CSI report corresponds to the second CSI report.

**21.** The method according to claim 20, wherein the first CSI report and the second CSI report are configured as linked CSI reports through radio resource control (RRC); or
the first CSI report and the second CSI report are configured as linked CSI reports through a same identity.

**22.** The method according to claim 20, wherein when the first information is the CSI of the first type, a report quantity of the first CSI report comprises a precoding matrix indicator (PMI); or
when the first information is the performance monitoring report, the performance monitoring report comprises any one or a combination of: a generalized cosine similarity (GCS), square generalized cosine similarity (SGCS), or a normalized mean square error (NMSE).

**23.** The method according to claim 22, wherein reportQuantity in a first CSI report configuration is channel state information reference signal resource indicator - rank indicator - layer indicator - precoding matrix indicator - channel quality indicator (cri-RI-LI-PMI-CQI) or channel state information reference signal resource indicator - rank indicator - precoding matrix indicator - channel quality indicator (cri-RI-PMI-CQI).

**24.** The method according to claim 20, wherein

the first CSI report and the second CSI report have a same time-domain type, wherein the time-domain type comprises: periodic, semi-persistent, and aperiodic;
when the time-domain type is periodic or semi-persistent, periodicities of the first CSI report and the second CSI report are the same.

**25.** The method according to claim 24, wherein

when the time-domain type is semi-persistent, the first CSI report and the second CSI report are activated for reporting by a same medium access control control element (MAC CE) or a same downlink control information (DCI); or
when the time-domain type is aperiodic, the first CSI report and the second CSI report are triggered for reporting by a same DCI.

**26.** The method according to claim 20, wherein when a number of the first CSI report or the second CSI report is M, a MAC CE or DCI indicates to select N first CSI reports or N second CSI reports from the M first CSI reports or the M second CSI reports, or activates the N first CSI reports or the N second CSI reports for reporting from the M first CSI reports or the M second CSI reports, wherein M is an integer greater than or equal to 2, and N E [1, M].

**27.** The method according to claim 20, wherein the first CSI report and the second CSI report have a same priority, or a priority value of the second CSI report is greater than a priority value of the first CSI report; the priority is calculated based on related information of the second CSI report.

**28.** The method according to claim 20, wherein the first CSI report and the second CSI report have priorities, and the priorities are calculated based on the following formula:

$$\mathrm{Pri}_{iCSI}(y,k,c,s,x) = 2 \cdot N_{cells} \cdot M_s \cdot y + N_{cells} \cdot M_s \cdot k + M_s \cdot c + s + \frac{1}{K_i} i,$$

or

$$\mathrm{Pri}_{iCSI}(y,k,c,s,x) = 2 \cdot N_{cells} \cdot M_s \cdot K_i \cdot y + N_{cells} \cdot M_s \cdot K_i \cdot k + M_s \cdot K_i \cdot c + K_i \cdot s + i$$

wherein a smaller value of $\mathrm{Pri}_{iCSI}(y, k, c, s, x)$ corresponds a higher priority;
wherein for an aperiodic CSI report carried on a physical uplink shared channel (PUSCH), $y$ =0; for a semi-persistent CSI report carried on the PUSCH, $y$ =1; for a semi-persistent CSI report carried on a physical uplink control channel (PUCCH), $y$ =2; for a periodic CSI report carried on the PUCCH, $y$ =3;
wherein for a CSI report carrying layer-1 reference signal received power (L1-RSRP) or layer-1 signal to interference plus noise ratio (L1-SINR), $k$ =0; for a CSI report not carrying the L1-RSRP or the L1-SINR, $k$ =1;
wherein c is a serving cell index configured by higher layer signaling;
wherein $N_{cells}$ is a value of a higher layer parameter maxNrofServingCells;
wherein s is a report configuration identity reportConfigID configured by higher layer signaling;
wherein $M_s$ is a value of a higher layer parameter maxNrofCSI-ReportConfigurations;
wherein i is a CSI report index within linked CSI reports, $i \in [0, K_i - 1]$, $K_i$ is a number of CSI reports within the linked CSI reports, and the linked CSI reports are obtained based on configurations of the first CSI report and the second

CSI report.

**29.** The method according to claim 20, wherein when the first CSI report and the second CSI report are configured as linked CSI reports, a number of the first CSI report is one and a number of the second CSI report is more than one, or a number of the first CSI report is more than one and a number of the second CSI report is one.

**30.** The method according to claim 20, wherein when the first CSI report belongs to a first linked CSI reports and the second CSI report belongs to a second linked CSI reports, each first CSI report in the first linked CSI reports corresponds to each second CSI report in the second linked CSI reports on a one-to-one mapping according to their order; or

one first CSI report in the first linked CSI reports corresponds to at least two second CSI reports in the second linked CSI reports; or
at least two first CSI reports in the first linked CSI reports correspond to one second CSI report in the second linked CSI reports.

**31.** The method according to claim 19, wherein receiving the first information and the second information determined by the user equipment based on the CSI report configuration comprises:
receiving a third CSI report determined by the user equipment based on the CSI report configuration, wherein the third CSI report is used to report the first information and the second information, and the first information corresponds to the second information.

**32.** The method according to claim 31, wherein

the first information and the second information are reported at two consecutive reporting occasions, wherein an interval between the two consecutive reporting occasions is one preset periodicity, and a reporting periodicity of each of the first information and the second information is twice the periodicity; or
a reporting periodicity of each of the first information and the second information is twice the periodicity, and a reporting time offset difference between the first information and the second information is one periodicity.

**33.** The method according to claim 31, wherein

when the first information is the CSI of the first type, a report quantity of the first information comprises a precoding matrix indicator (PMI); or, when the first information is the performance monitoring report, the performance monitoring report comprises any one or a combination of: a generalized cosine similarity (GCS), square generalized cosine similarity (SGCS), or a normalized mean square error (NMSE);
a report quantity of the second information comprises the PMI.

**34.** The method according to claim 33, wherein reportQuantity in a first information configuration is cri-RI-LI-PMI-CQI or cri-RI-PMI-CQI; and/or
reportQuantity in a second information configuration is cri-RI-LI-PMI-CQI or cri-RI-PMI-CQI.

**35.** The method according to claim 31, wherein

the first information and the second information are associated through a same process identity (process ID); or
a report quantity of the first information comprises identification information of the second information and a reporting occasion index of the second information.

**36.** An information reporting apparatus, applied to a user equipment, the apparatus comprising:

a first module, configured to report, to a network device, first information and second information via channel state information (CSI) report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

**37.** An information reporting apparatus, applied to a network device, the apparatus comprising:

a first module, configured to receive first information and second information determined by a user equipment based on a channel state information (CSI) report configuration;
wherein the channel state information (CSI) report configuration is configured by the network device;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

**38.** An information reporting apparatus, applied to a user equipment, the apparatus comprising: a processor and a transceiver;

the processor is configured to configure channel state information (CSI) report;
the transceiver is configured to report, to a network device, first information and second information via the CSI report;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

**39.** An information reporting apparatus, applied to a network device, the apparatus comprising: a processor and a transceiver;

the processor is configured to configure a channel state information (CSI) report configuration;
the transceiver is configured to receive first information and second information determined by a user equipment based on the CSI report configuration;
wherein the first information is CSI of a first type or a performance monitoring report, and the performance monitoring report is for monitoring the CSI of a second type;
wherein the second information is the CSI of the second type;
wherein the CSI of the first type corresponds to the CSI of the second type.

**40.** An information reporting system, comprising:

a user equipment, configured to report, to a network device, first information and second information via channel state information (CSI) report, wherein the first information is CSI of a first type or a performance monitoring report, the performance monitoring report is for monitoring the CSI of a second type, the second information is the CSI of the second type, and the CSI of the first type corresponds to the CSI of the second type;
the network device, configured to receive the first information and the second information determined by the user equipment based on a channel state information (CSI) report configuration, wherein the CSI report configuration is configured by the network device.

**41.** A communication device, comprising: a transceiver, a memory, a processor, and a program stored in the memory and executable on the processor;
the processor is configured to read the program in the memory to implement the steps of the information reporting method according to any one of claims 1-18 or claims 19-35.

**42.** A readable storage medium for storing a program, wherein the program, when executed by a processor, implements the steps of the information reporting method according to any one of claims 1-18 or claims 19-35.

start
reporting, to a network device, first information and second information via CSI report; wherein the first information is CSI of a first type or a performance monitoring report, and the performance monitoring report is for monitoring the CSI of a second type; wherein the second information is the CSI of the second type; the CSI of the first type corresponds the CSI of the second type
101
end

FIG. 1

start
reporting, to a network device, a first CSI report and a second CSI report, wherein the first CSI report is used to report the first information, the second CSI report is used to report the second information, and the first CSI report corresponds to the second CSI report
201
end

FIG. 2

start
reporting, to a network device, a third CSI report, wherein the third CSI report is used to report the first information and the second information, and the first information corresponds to the second information
301
end

FIG. 3

start

401

receiving first information and second information determined by a user equipment based on a CSI report configuration; wherein the channel state information (CSI) report configuration is configured by a network device; the first information is CSI of a first type or a performance monitoring report, and the performance monitoring report is for monitoring the CSI of a second type; the second information is the CSI of the second type; the CSI of the first type corresponds to the CSI of the second type

end

**FIG. 4**

500
information reporting apparatus
first module
501

**FIG. 5**

600
information reporting apparatus
first module
601

**FIG. 6**

701
processor
702
transceiver

FIG. 7

801
processor
802
transceiver

FIG. 8

901
user equipment
902
network device

FIG. 9

**INTERNATIONAL SEARCH REPORT**

International application No.
**PCT/CN2024/126985**

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXTC, EPTXT, USTXT, WOTXT: CSI, 上报, 报告, 第一, 第二, 类型, 关联, 混合, 联合, 组, 过程, 进程, 信道状态信息, 优先级, 上报量, report, first, second, type I, type II, association, joint, combination, group, process, priority, reportQuantity, RI, PMI

**C. DOCUMENTS CONSIDERED TO BE RELEVANT**

| Category* | Citation of document, with indication, where appropriate, of the relevant passages | Relevant to claim No. |
|---|---|---|
| PX | CN 118741585 A (CHINA MOBILE COMMUNICATION CO., LTD., RESEARCH INSTITUTE et al.) 01 October 2024 (2024-10-01)<br>description, paragraphs [0005]-[0388] | 1-42 |
| Y | CN 107231656 A (BEIJING XINWEI TELECOM TECHNOLOGY INC.) 03 October 2017 (2017-10-03)<br>description, paragraphs [0002]-[0092] | 1-10, 12-27, 29-42 |
| Y | ERICSSON. "R1-1809828, Summary of Views on CSI Reporting v4" *3GPP tsg_ran\wg1_rl1,* 24 August 2018 (2018-08-24),<br>section 2 | 1-10, 12-27, 29-42 |
| Y | WO 2022236635 A1 (GUANGDONG OPPO MOBILE TELECOMMUNICATIONS CORP., LTD.) 17 November 2022 (2022-11-17)<br>description, paragraphs [0049]-[0284] | 1-10, 12-27, 29-42 |
| Y | CN 107370531 A (BEIJING XINWEI TELECOM TECHNOLOGY INC.) 21 November 2017 (2017-11-21)<br>description, paragraphs [0005]-[0152] | 1-10, 12-27, 29-42 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 January 2025** | **21 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No. **PCT/CN2024/126985**

**C. DOCUMENTS CONSIDERED TO BE RELEVANT**

| Category* | Citation of document, with indication, where appropriate, of the relevant passages | Relevant to claim No. |
|---|---|---|
| Y | WO 2023155161 A1 (BEIJING XIAOMI MOBILE SOFTWARE CO., LTD.) 24 August 2023 (2023-08-24)<br>description, paragraphs [0114]-[0356] | 1-10, 12-27, 29-42 |
| A | CN 113302968 A (GUANGDONG OPPO MOBILE TELECOMMUNICATIONS CORP., LTD.) 24 August 2021 (2021-08-24)<br>entire document | 1-42 |

Form PCT/ISA/210 (second sheet) (July 2022)

**INTERNATIONAL SEARCH REPORT**
**Information on patent family members**

International application No.
**PCT/CN2024/126985**

| Patent document cited in search report | Publication date (day/month/year) | Patent family member(s) | Publication date (day/month/year) |
|---|---|---|---|
| CN 118741585 A | 01 October 2024 | None | |
| CN 107231656 A | 03 October 2017 | None | |
| WO 2022236635 A1 | 17 November 2022 | None | |
| CN 107370531 A | 21 November 2017 | None | |
| WO 2023155161 A1 | 24 August 2023 | None | |
| CN 113302968 A | 24 August 2021 | US 2022014957 A1 | 13 January 2022 |
| | | US 12133104 B2 | 29 October 2024 |
| | | EP 3918830 A1 | 08 December 2021 |
| | | EP 3918830 A4 | 06 April 2022 |
| | | EP 3918830 B1 | 09 August 2023 |
| | | WO 2021057679 A1 | 01 April 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311492942